# EUROPEAN PATENT APPLICATION

(11) **EP 2 631 351 A1**
(43) Date of publication of application: **28.08.2013**
(21) Application number: 12156632.7
(22) Date of filing: 23.02.2012
(51) Int. Cl.: D06F 58/02, D06F 58/04, D06F 58/24, D06F 58/28, D06F 58/20

(54) **Laundry dryer**

(71) Applicant: Electrolux Home Products Corporation N.V., 1130 Brussel (BE)
(72) Inventor: Cavarretto, Francesco, 33080 Porcia (PN) (IT); Ugel, Maurizio, 33080 Porcia (PN) (IT); Vignocchi, Massimiliano, 33080 Porcia (PN) (IT)
(74) Representative: Nardoni, Andrea

(57) **Abstract**

The invention relates to a laundry dryer (1) including a process air circuit (2) comprising a drying chamber (3) for receiving a load to be dried and an air recirculating conduit (11) in which an process air stream is apt to flow; an external cooling air channel (20) in which an external air stream is apt to flow; a heat exchanger (14) to thermally couple the process air stream exiting the drying chamber (3) to the external air stream so as to cool and dehumidify said air process stream; and a spill circuit (7) connecting the external air channel (20) to the air recirculating conduit (11) apt to spill a fraction of the external air stream from the external air channel (20) downstream of the heat exchanger (14) and to introduce the same into the air recirculating conduit (11) downstream of the heat exchanger (14), when the dryer (14) is in operation.

## Description

### Field of the invention

The present invention relates to a laundry dryer, in particular to a laundry dryer which optimizes the energy consumption and/or the duration of the drying cycles.

### Background art

Most dryers consist of a rotating drum called a tumbler, thus called tumble dryer, through which heated air is circulated to evaporate the moisture from the load. The tumbler is rotated around its axis.

Known laundry dryer includes two categories: condense laundry dryers and vented laundry dryers. Dryers of the first category circulate air exhausted from the drum through a heat exchanger/condenser to cool the air and condense the moisture; they subsequently re-circulate the air back through the drum, after having heated the same using a heater. Dryers of the second category draw air from the surrounding area, heat it, blow it into the drum during operation and then exhaust it through a vent into the outside.

Generally, dryer of the first category are the most common in the market, due to the fact that they do not require special means for proper installation such as an exhaust duct to exhaust the humid hot air coming from the drum. However, commonly, for the same power and the same amount of load, the drying cycle of a condensed dryer is longer than an equivalent cycle in a vented dryer.

Several solutions have been proposed according to the prior art in order to improve the efficiency of condense dryers.

European patent EP 0467188 discloses a laundry drier with a heat pump circuit for heating of the process air guided by means of an electric-motor-driven fan in a closed process air channel, and a heat pump circuit which is equipped for precipitation of the moisture contained in the process air from the laundry drying chamber and which consists of a condenser, evaporator, compressor and throttle, as well as in addition with a settable opening for exhaust air and an opening for feed air in the process channel.

German patent DE 4330456 relates to a tumble dryer with a drum, with a closed drying-air circuit by means of which drying air can be conducted through the drum and which is provided with a first blower as well as with a heating system and a condenser, with an open coolant circuit by means of which cooling air can be conducted by means of a second blower through the condenser, and with a refrigerant circuit comprising a compressor, a liquefier arranged downstream in the drying-air circuit, an expansion valve and an evaporator arranged in the cooling-air circuit.

European patent EP 2069566 describes an apparatus for drying items of laundry, comprising an essentially closed first channel system for channeling a process-air stream which acts on the items of laundry, in which first channel system are arranged a treatment chamber for receiving items of laundry, a first fan for driving the process-air stream, a first cooling channel of a heat exchanger, and a second heating channel of a heat pump, which second heating channel is located, along the process-air stream, downstream of the first cooling channel, and also comprising an open, second channel system for channeling a secondary-air stream, in which second channel system are arranged a second fan for driving the secondary-air stream, a first heating channel of the heat exchanger, and a second cooling channel of the heat pump. The first channel system additionally contains a heater for heating the process-air stream, and the second cooling channel is located, along the secondary-air stream, downstream of the first heating channel. The invention also relates to a process which is suitable for being carried out in such an apparatus.

### Summary of the invention

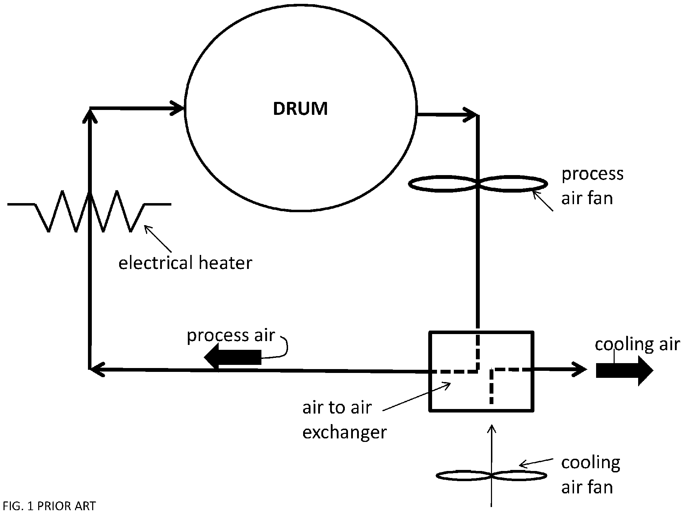

A traditional condense dryer includes a drying chamber, such as a drum, in which the load, e.g. clothes, to be dried are placed. The drying chamber is part of a process circuit, in particular a closed-loop circuit, including an air recirculating conduit for channeling a stream of a fluid, such as air, to dry the load. The air recirculating circuit is connected with its two opposite ends to the drying chamber. More specifically, hot dry air is fed into the drying chamber, flowing over the laundry, and the resulting humid cool air exits the same. The humid air stream rich in water vapor is then fed into a heat exchanger - such as an air to air exchanger - where, thanks to a heat exchange with a stream of cool air coming from the ambient, the humidity present in the process air stream condenses. The stream of cool air is coming preferably from the ambient in which the dryer is located and flows inside a cooling air channel conveying the cool ambient stream through the air to air heat exchanger. The resulting cool dry air in the process circuit is then heated up before entering again in the drying chamber, and the whole loop is repeated till the end of the drying cycle. The heating in the process circuit is performed for example by an electrical heater located downstream of the air to air heat exchanger. Such a known condense dryer is depicted schematically in fig. 1.

In the following, with the terms "downstream" and/or "upstream", a position with reference to the direction of the flow of a fluid inside a conduit is indicated. Therefore, an electrical heater located downstream of an air to air heat exchanger means that the location of the heater is such that the air stream flowing into the conduit first passes through the heat exchanger and then trough the heater.

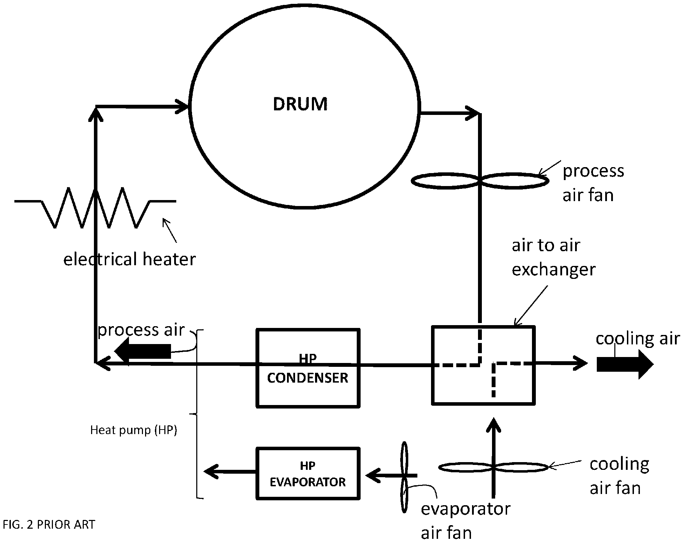

Alternatively or in addition, according to a different condense dryer realized according to the prior art and depicted in fig. 2, in the closed process circuit, preferably downstream of the heat exchanger, a heat pump is located, in order to heat in a more efficient way the process air. In this configuration, the electrical heater might be present or absent, heating being provided by the heat pump.

Applicants have considered the existing condense dryers and have tackled the problem of how to improve their overall machine efficiency, with reference to both energy and cycle time.

Applicants have realized that the inclusion in the condense dryer according to the prior art of an additional air circuit, in particular a spill circuit, further improves the energy efficiency of the dryer. The spill circuit connects the cooling air channel downstream of the heat exchanger to the process air conduit downstream of the heat exchanger in order to spill a portion of the cooling air stream which is relatively warm and dry after the passage through the heat exchanger and to introduce the same into the process circuit. In this way, the process air stream is rendered dryer and warmer with respect to the process air stream in the known dryer, saving energy and reducing the duration of the drying cycle of the whole dryer. The result is a "hybrid" condense dryer according to the invention.

According to an aspect, the invention relates to a laundry dryer including
- A process air circuit comprising a drying chamber for receiving a load to be dried and an air recirculating conduit in which a process air stream is apt to flow;
- A cooling air channel in which a cooling air stream is apt to flow;
- A heat exchanger to thermally couple the process air stream exiting the drying chamber to the cooling air stream so as to cool and dehumidify said process air stream; and
- An air spill circuit connecting an outlet of the cooling air channel to a portion of the air recirculating conduit downstream of the heat exchanger, so as to spill a fraction of the cooling air stream r and to introduce the same into the air recirculating conduit, when the dryer is in operation.

According to another aspect, the invention relates to a method to dry load in a drying chamber, the method comprising:
- Guiding a process air stream in an air recirculating conduit in which the process air stream acts on the laundry located in said drying chamber;
- Passing said process air stream in a heat exchanger;
- Thermally coupling said process air stream with a cooling air stream flowing in a cooling air channel in said heat exchanger;
- Spilling a fraction of the cooling air stream from the cooling air channel downstream of the heat exchanger; and
- introducing the spilled air into the air recirculating conduit downstream of the heat exchanger.

According to any of the above aspects, the following characteristics, alternatively or in addition, can also be comprised.

Preferably only a fraction of the whole cooling air stream exiting the heat exchanger is spilled and the remaining portion of the cooling air stream is released in the ambient from which the originating cooling stream entering into the air cooling conduit has been taken. Preferably the spilled stream is about 20 -60 % of the total stream.

Preferably, in order to maintain the amount of the process air substantially constant in volume, the same amount of air which has been introduced by the spill circuit is discharged from the process conduit, for example through a discharge channel connecting the air recirculating conduit to the external ambient

Preferably, the laundry dryer of the invention includes a first fan or blower apt to impart motion to the process air stream inside the process conduit. Preferably, the laundry dryer also includes a second fan or blower apt to impart motion to the cooling air inside the cooling air channel. Preferably, the first fan is located in the air recirculating circuit immediately downstream of the drum and the second fan is located in the cooling air channel immediately upstream of the heat exchanger, however the fans' respective locations are not regarded as necessary for the functionality of the present invention.

According to a preferred embodiment of the invention, the laundry dryer of the invention also includes an heat pump. The heat pump includes an evaporator, a condenser, and a refrigerant closed circuit where refrigerant is located. Preferably, the condenser of the heat pump is used to heat the process air in the process air circuit, i.e. the refrigerant fluid flowing into the closed refrigerant circuit condenses releasing heat in correspondence of the condenser, and this heat is heating up the process air. It is to be understood that in case some refrigerants are used, for example CO₂, no phase change may occur in the evaporator and/or condenser of the heat pump. In this case, with the term "condenser" a gas cooler is meant and consequently with the term "evaporator" a gas heater is indicated. In this first embodiment of the invention, the condenser is located in the process air circuit. The condenser of the heat pump is preferably located downstream of said heat exchanger.

According to a first variant of the above described preferred embodiment, the evaporator of the heat pump is located in the discharge channel, i.e. the discharged air from the air recirculating circuit flowing in the discharge channel is cooled down by the evaporation of the refrigerant fluid in the heat pump.

This variant achieves numerous advantages. First of all the evaporator of the heat pump works in favorable conditions, since the discharged air from the air recirculating conduit has generally a temperature higher than the ambient temperature. Moreover, depending on the parameters of the dryer's construction, it is possible to realize a dryer according to the invention which is not affecting the overall environmental conditions of the ambient in which the dryer is located, i.e. the dryer of the invention is not altering the temperature and the humidity of the ambient. The amount of heat subtracted from the ambient by the evaporator can be designed to be equal to the amount of heat released to the ambient by the cooling air stream exiting the cooling air channel warmed up in the heat exchanger. In other words, the air discharged by the air cooling channel downstream of the air/air heat exchanger and the air discharged by the discharge channel downstream of the heat pump evaporator "compensate" themselves, the first one being warmer than the ambient air and the second being cooler. The extra humidity present in the discharged air is also removed by the heat pump evaporator that makes it condense. This can also "compensate" for additional humidity losses of the dryer due - for example - to humid air wasted during the overall drying process.

Preferably, the dryer according to this variant includes a water collector in order to collect the water which condense in the evaporator due to the discharged air dehumidification.

According to a different variant of the invention, the evaporator of the heat pump is located in the air cooling channel upstream of the heat exchanger, in order to cool and dehumidify the air cooling stream before it enters in the heat exchanger. In this case, the evaporator plays an active role in improving the overall dryer efficiency: since the air entering the heat exchanger through the cooling air channel is cooler than the ambient air, the temperature difference between the cooling air stream and the process air stream is higher than without the evaporator, therefore the amount of heat which can be exchanged between the two streams increases as well. The process air stream can be thus further dehumidified, and the cycle time is substantially reduced, achieving a time saving for the user.

According to a third variant of the same embodiment, the evaporator of the heat pump is located in the cooling air channel but - differently from the previous variant - this time downstream of the heat exchanger. The air stream flowing in the cooling air channel is cooled down and dehumidified before it exits in the ambient. In this way, the temperature of the air at the evaporator inlet is higher than the temperature of ambient air, being the cooling air stream warmed up by the heat exchanger: a bigger difference allows the heat pump to work in more favorable conditions. Energy saving can be thus achieved.

In addition, the dryer of this variant can be designed in order not to modify the environment conditions of the ambient such as temperature and humidity: the air exiting the evaporator, cool and dry, "compensate" the warm and humid air discharged by the discharge channel.

According to a different embodiment of the invention, the condenser of the heat pump is located along the spill circuit. The air which has been spilled from the cooling air channel downstream of the heat exchanger is thus warmed up before entering the air recirculation conduit. In this embodiment only a portion of the process air is warmed up by the heat pump, therefore preferably the dryer includes a heater, such as an electrical heater, in the air recirculation conduit. Introducing the condenser in the spill circuit has the advantage of reducing the friction loss in the process air circuit, i.e. in the first embodiment of the invention, due to the presence of the condenser in the air recirculating conduit, the process air stream experiences a considerable pressure drop, which is avoided positioning the condenser in the spill circuit, at the price of a lower heating of the process air stream. However, the amount of spilled air can be greatly varied and a relatively large fraction of the process air can be heated through the condenser in the spill circuit. According to a first variant of this embodiment, the location of the evaporator is the same as in the first variant of the previous embodiment, and the same advantages can be achieved.

According to a second variant of this embodiment, the location of the evaporator is the same as in the second variant of the previous embodiment, and the same advantages can be achieved.

According to a third variant of this embodiment, the location of the evaporator is the same as in the third variant of the previous embodiment, and the same advantages can be achieved.

These and other features and advantages of the invention will better appear from the following description of some exemplary and non-limitative embodiments, to be read with reference to the attached drawings, wherein:
- Fig. 1 is a schematic view, where some elements have been removed for clarity, of a laundry condense dryer according to the prior art;
- Fig. 2 is a schematic view, where some elements have been removed for clarity, of a second laundry condense dryer according to the prior art;
- Fig. 3 is a schematic view, where some elements have been removed for clarity, of a laundry dryer realized according to the invention;
- Fig. 4 is a schematic view, where some elements have been removed for clarity, of a laundry dryer realized according to an additional preferred embodiment the invention;
- Fig. 5 is a schematic view, where some elements have been removed for clarity, of a laundry dryer realized according to an additional preferred embodiment the invention;
- Fig. 6 is a schematic view, where some elements have been removed for clarity, of a laundry dryer realized according to an additional preferred embodiment the invention;
- Fig. 7 is a schematic view, where some elements have been removed for clarity, of a laundry dryer realized according to an additional preferred embodiment the invention;
- Fig. 8 is a schematic view, where some elements have been removed for clarity, of a laundry dryer realized according to an additional preferred embodiment the invention;
- Fig. 9 is a schematic view, where some elements have been removed for clarity, of a laundry dryer realized according to an additional preferred embodiment the invention.

### Preferred embodiments of the invention

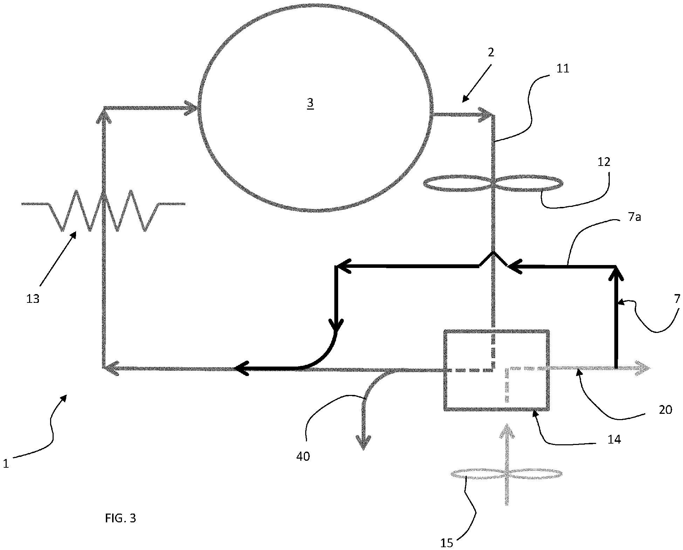

With initial reference to fig. 3, a laundry dryer realized according to the present invention is globally indicated with 1.

Laundry dryer 1 comprises an outer box casing (not shown), preferably but not necessarily parallelepiped-shaped, and a drying chamber, such as a drum 3, for example having the shape of a hollow cylinder, for housing the laundry and in general the clothes and garments to be dried. The drum 3 is preferably rotatably fixed to the casing, so that it can rotates around a preferably horizontal axis (in alternative embodiments, rotation axis may be vertical or tilted). Access to the drum 3 is achieved for example via a door, preferably hinged to casing, which can open and close an opening realized on the casing itself. Opening preferably faces drum 3 and it can be sealed by door.

Laundry dryer 1 also comprises an electrical motor assembly for rotating, on command, revolving drum 3 along its axis inside casing. Casing, revolving drum 3, door and motor are common parts in the technical field and are considered to be known; therefore they will not be described in details.

Dryer 1 additionally includes a process air circuit 2 which comprises the drum 3 and an air recirculating conduit 11, schematically depicted in fig. 3 as a plurality of arrows showing the path flow of a process air stream through the dryer 1. Air recirculating conduit 11 is preferably connected with its opposite ends to two opposite sides of drum 3. More in detail, the process air circuit 2 includes a first fan or blower 12, a heater 13 and heat exchanger 14, an air to air heat exchanger, preferably located between the fan 12 and the heater 13.

Preferably, heater 13 is located inside casing within the conduit 11 upstream the drum 3 and, according to a preferred embodiment, heater 13 is an electrical heater such as a resistor.

Additionally, dryer 1 includes a cooling air channel 20 in which an external air stream taken from the ambient where the dryer 1 is located is apt to flow when dryer 1 is operating. A portion of the cooling air channel 20 is included in the heat exchanger 14, so that the relatively "cool" external air stream is used to cool down the process air stream, as detailed in the following. The cooling air stream derives its motion by means of a second fan or blower 15.

According to the invention, dryer 1 also includes a spill circuit 7, including a conduit 7a connecting the outlet of the cooling air channel 20 downstream of the heat exchanger 14 to a portion of the air recirculating conduit 11 downstream of the heat exchanger 14, so as to spill a fraction of the cooling air stream (warmed up by the heat exchanger) and introduce the same into the air process circuit 2. The spilled air thus mixes with the process air stream.

Dryer 1 further includes a discharge channel 40, to discharge process air from the conduit 11. The discharge channel 40 preferably discharges process air downstream the air to air heat exchanger 14. The air is discharged at the outlet of the discharge channel for example via a flap which opens the channel to the external ambient (the pressure in the channel is higher than the ambient pressure).

Preferably, the discharge channel 40 is connected to the conduit 11 downstream of the portion of the air recirculating conduit 11 which is connected to the spill circuit 7, i.e. downstream of the outlet of the spill circuit 7.

Starting from the bottom of the dryer 1, inside conduit 11, the dryer operates as follows: a relatively cold dry process air stream flowing in conduit 11 exiting the air to air heat exchanger 14 reaches the heater 13, where it is heated as it passes through. The heated process air stream is then introduced in the rotatable drum 3, for example via through holes, blown by fan 12, and it dries the laundry present inside drum 3. The process air stream exiting drum 3 is then humid due to the humidity removed from the laundry.

The humid process air stream then travels through another portion of the conduit 11 and passes the air to air heat exchanger 14 where it exchanges heat with the cooling air stream flowing into the cooling air channel 20. In this way, the warm and humid process air stream cools down and the humidity contained therein condenses, while the cooling air stream warms up, as the two streams pass through the heat exchanger 14.

Preferably, in correspondence of heat exchanger 14, the dryer 1 of the invention may include a condensed-water canister (not shown in the appended drawings) which collects the distilled water produced, when the dryer is in operation, inside heat exchanger 14 by condensation of the surplus moisture in the process airstream arriving from the drying chamber 3. The canister is located at the bottom of the heat exchanger. Preferably, through a connecting pipe and a pump (also not shown), the collected demineralized water is sent in a reservoir located in correspondence of the highest portion of the dryer 1 so as to facilitate manual discharge of the water by the user.

According to the invention, the cooling air stream exiting the air to air heat exchanger 14, warmed up by the latter due to the heat exchange with the warm process air, is then divided in two streams, a first stream is discharged in the ambient where the original cooling air was taken from, and a second stream is diverted onto the conduit 7a of the spill circuit 7 through which it flows till it is introduced in the air recirculation conduit 11.

Downstream the air to air heat exchanger 14, the now cool and dry process air stream exiting the heat exchanger mixes with the spilled warm cooling air stream and the joined stream restarts the above described loop in the dryer 1.

Preferably, substantially the same amount of air which has been introduced into conduit 11 by the spill circuit 7 is exhausted from the same via discharge channel 40, so as the amount - in particular the volume - of process air is kept substantially constant.

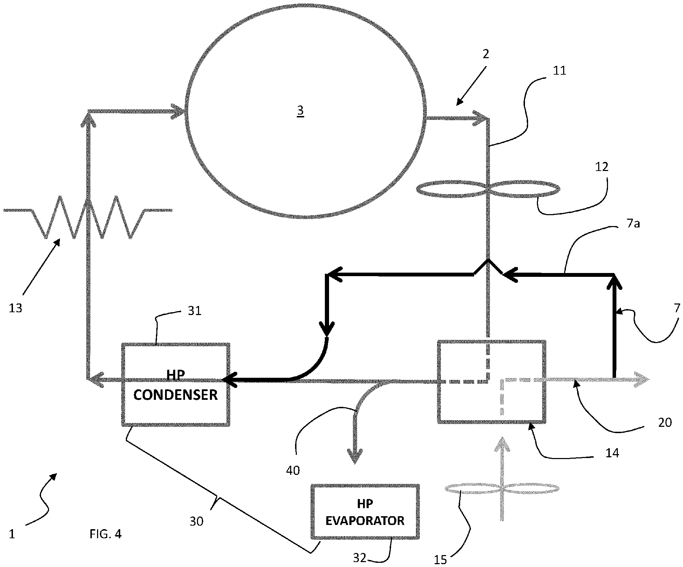

With now reference to figs. 4-9, the dryer 1 of the invention additionally comprises, according to preferred embodiments of the present invention, a heat pump 30 including a condenser 31 and a evaporator 32. Heat pump 30 also includes a refrigerant closed circuit (not shown in the pictures) in which a refrigerant fluid flows, when the dryer 1 is in operation, condenses in correspondence of the condenser 31, releasing heat, and evaporates in correspondence of the evaporator 32, absorbing heat. Alternatively, no phase transition takes place in the condenser and/or evaporator, which indicates in this case respectively a gas heater and gas cooler.

Preferably, dryer 1 also includes a control mechanism (not shown) including a switch to selectively activate or deactivate heat pump 30: the user can therefore selects whether the heat pump 30 is required for the desired drying cycle or not. Short but less energy efficient, or more efficient but longer drying cycles can be therefore alternatively selected.

According to the embodiment of figs. 4, 5 and 6, the condenser 31 of the heat pump 30 is located in correspondence of the air recirculating conduit 11, preferably downstream the heat exchanger 14, so that the process air stream exiting the heat exchanger 14 is warmed up by the heat pump 30. It is to be understood that in this embodiment including heat pump 30 in conduit 11, the heater 13 can also be omitted, being the heat pump 30 sufficient to heat up the air process stream for the purpose of laundry drying. However, heat pump 30 and heater 13 can also work together to speed up the heating process (and thus reducing the drying cycle time). In the latter case, preferably condenser 31 of heat pump 30 is located upstream heater 13.

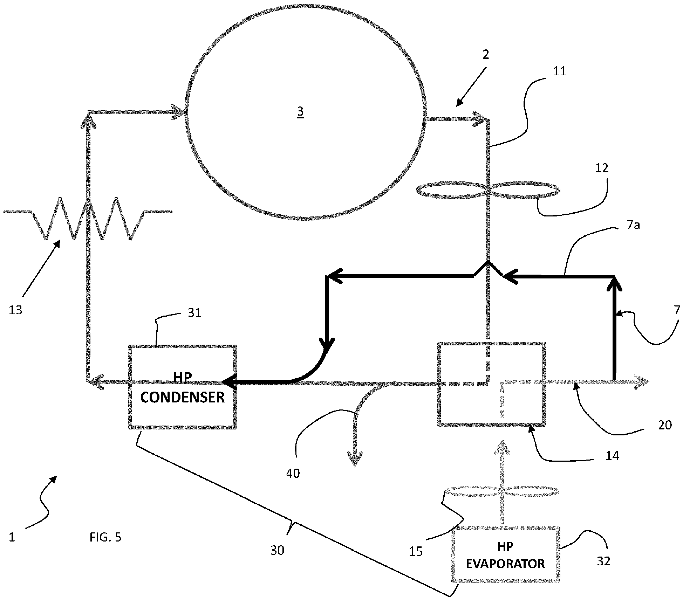

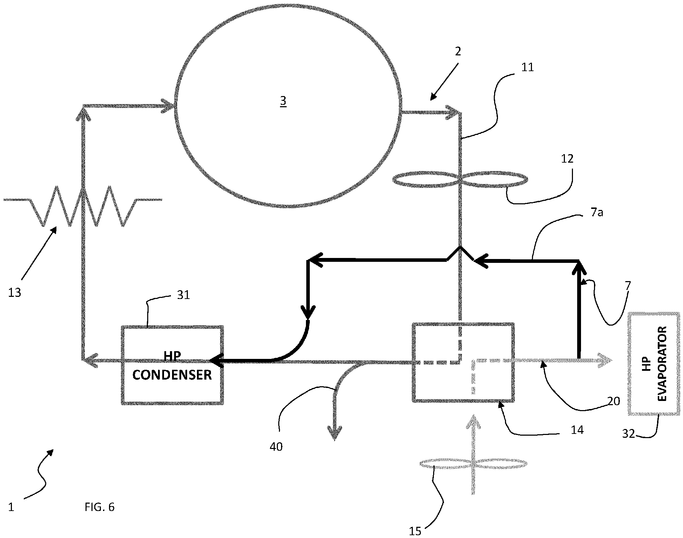

In the variants of the above described embodiment, the evaporator 32 of heat pump 30 can be located in different positions according to the desired advantages to be obtained. In the variant depicted in fig. 4, the dryer 1 includes evaporator 32 located in correspondence of discharge channel 40 to cool down and dehumidify the discharged process air before it is exhausted in the ambient. Alternatively, evaporator 32 can be located in correspondence of the cooling air conduit 20, upstream of the heat exchanger 14, so that inside heat exchanger 14 a heat exchange between the cooling air stream cooler than ambient air and the process air stream takes place (figure 5). Further, as depicted in fig. 6, the evaporator 32 can be located still in correspondence of the cooling air circuit 20, but downstream of the heat exchanger 14, to cool the warm cooling air stream exiting the heat exchanger 14.

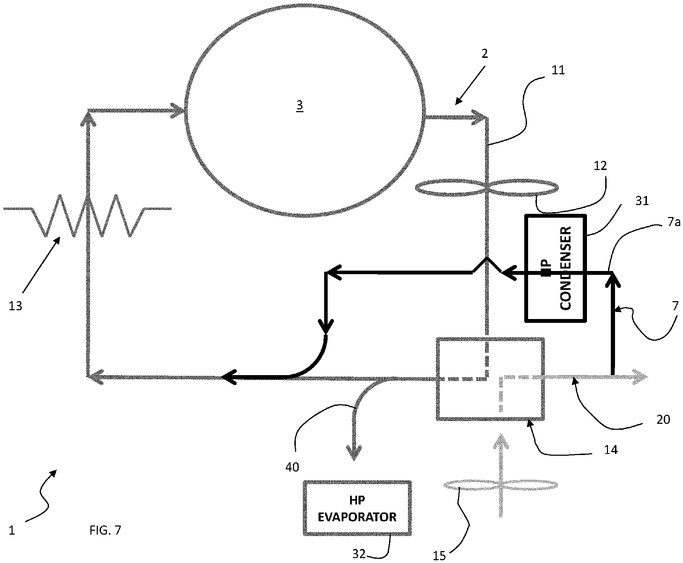

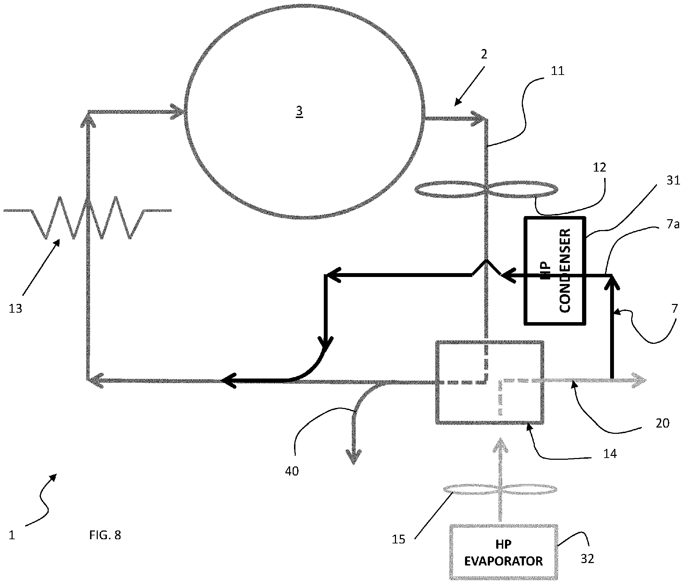

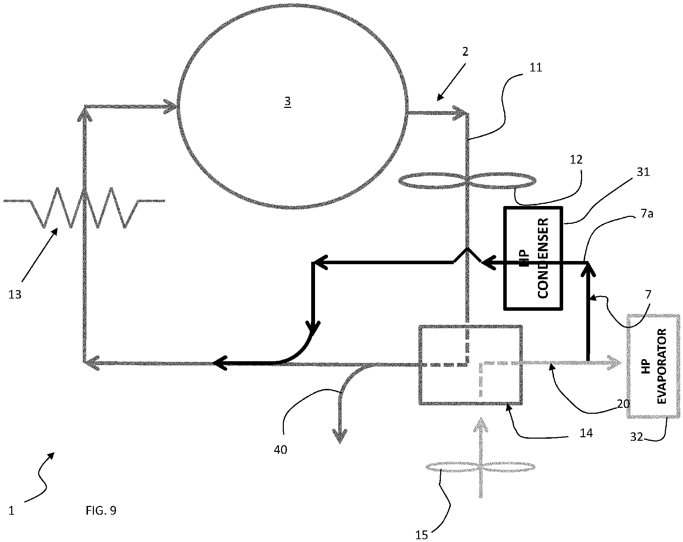

With now reference to figs. 7, 8 and 9, according to a different embodiment of the invention, the condenser 31 of heat pump 30 is located in correspondence of the spill circuit 7. The portion of cooling air stream exiting from the heat exchanger 14 and entering into the spill circuit is therefore heated up before entering the air recirculating conduit 11. In this embodiment, heater 13 is preferably present in cooperation with heat pump 30. According to the variant of the embodiment depicted in fig. 7, the evaporator 32 of heat pump 30 is located in correspondence of discharge channel 40 to cool down the exhausted process air. Alternatively, as shown in fig. 8, the evaporator 32 is located along the cooling air circuit 20 upstream of the heat exchanger 14 to heat up the external air stream entering the latter. Moreover, as in fig. 9, the evaporator 32 can be located at the exit of the cooling air channel 20, to cool down the cooling air stream warmed up by the heat exchanger 14 before it is released in the ambient. The evaporator 32 is therefore located downstream of the heat exchanger 14, preferably after the external cooling air stream has been divided in two streams (i.e. after the bifurcation with the spill circuit 7).

Preferably, in the embodiments of the invention including the heat pump 30, the dryer 1 also includes a further condensed-water canister (not shown in the appended drawings) located in correspondence of the evaporator 32 of the heat pump 30 to collect the condensed water which is formed therein due to the release of humidity from the process air stream or the spilled air stream. This additional canister either is in fluid connection with the canister located in correspondence to the heat exchanger 14 or it includes an independent conduit and pump to move the condensed water into the reservoir located in correspondence of top portion of dryer 1.

## Claims

1. A laundry dryer (1) including
- A process air circuit (2) comprising a drying chamber (3) for receiving a load to be dried and an air recirculating conduit (11) in which an air process stream is apt to flow;
- A cooling air channel (20) in which a cooling air stream is apt to flow;
- A heat exchanger (14) apt to thermally couple the air process stream exiting the drying chamber (3) to the cooling air stream so as to cool and dehumidify said air process stream;
**Characterized in that** it further comprises
a spill circuit (7) connecting an outlet of the cooling air channel (20) to a portion of the air recirculating conduit (11) downstream of said heat exchanger (14), so as to spill a fraction of the cooling air stream and to introduce the same into the air recirculating conduit (11)), when the dryer (1) is in operation.

2. A laundry dryer (1) according to claim 1, including a discharge channel (40) to discharge a fraction of the process air stream.

3. A laundry dryer according to claim 1 or 2, wherein said spilled air stream is about from 20°/ to 60% of the cooling air stream.

4. A laundry dryer (1) according to claim 2 or 3, wherein said discharge channel (40) is connected to said air recirculating conduit (11) downstream of said heat exchanger (14) and/or downstream said portion of the air recirculation circuit (11) connected to said air spill circuit (7).

5. A laundry dryer (1) according to any of the preceding claims, including a heat pump (30) comprising a condenser (31) and an evaporator (32), said condenser (31) being located in said process air circuit (2) so as to heat up the process air stream flowing into said air recirculating conduit (11) when the dryer (1) is in operation.

6. A laundry dryer (1) according to any of claims 1 to 4, including a heat pump (30) comprising a condenser (31) and an evaporator (32), said condenser (31) being located in said spill circuit (7) so as to heat up the spilled air stream flowing into said spill circuit (7) when the dryer (1) is in operation.

7. A laundry dryer (1) according to claim 5, wherein said condenser (31) is located downstream of said heat exchanger (14).

8. A laundry dryer (1) according to any of claims from 5 to 7, wherein said evaporator (32) is located in correspondence of said discharge channel (40) to exchange heat with said discharged process air when the dryer (1) is in operation.

9. A laundry dryer (1) according to any of claims from 5 to 7, wherein said evaporator (32) is located in correspondence of said cooling air circuit (7) upstream of said heat exchanger (14) to exchange heat with said cooling air stream entering said heat exchanger (14) when the dryer (1) is in operation.

10. A laundry dryer (1) according to any of claims from 5 to 7, wherein said evaporator (32) is located in correspondence of said cooling air circuit (7) downstream of said heat exchanger (14) to exchange heat with said cooling air stream exiting said heat exchanger (14) when the dryer (1) is in operation.

11. A laundry dryer (1) according to any of the preceding claims, wherein said process air circuit (2) comprises an electrical heater (13).

12. A laundry dryer (1) according to any of the preceding claims, including a first fan (12) and/or a second fan (15) to respectively impart motion to said air process stream in said air recirculating conduit (11) and/or to impart motion to said cooling air stream in said cooling air channel (20).

13. A method to dry load in a drying chamber (3), the method comprising:
- Guiding a process air stream in an air recirculating conduit (11) in which the process air stream acts on the laundry located in said drying chamber (3);
- Passing said process air stream in a heat exchanger (14);
- Thermally coupling said process air stream to a cooling air stream flowing in a cooling air channel (20) in said heat exchanger (14);
- Spilling a fraction of the cooling air stream from the cooling air channel (20) downstream of the heat exchanger (14); and
- introducing the spilled air into the air recirculating conduit (11) downstream of the heat exchanger (14).

14. The method of claim 13, including:
- heating the process air stream flowing into said air recirculating conduit (11) using a condenser (31) of a heat pump (30).

15. The method of claim 13 or 14, including:
- heating the spilled air stream flowing into said spill circuit (7) using a condenser (31) of a heat pump (30).
